# EUROPEAN PATENT SPECIFICATION

(11) **EP 2 734 464 B1**
(45) Date of publication and mention of the grant of the patent: **29.03.2017**
(21) Application number: 12778405.6
(22) Date of filing: 23.07.2012
(51) Int. Cl.: B65H 75/50, B26D 1/30, B26D 5/12, B29C 65/50, B29C 65/00, B29L 31/32

(54) **APPARATUS FOR CREATING A BUTT CONNECTION BETWEEN TUBULAR BODIES**
VORRICHTUNG ZUR ERZEUGUNG EINER STOSSVERBINDUNG ZWISCHEN ROHRFÖRMIGEN KÖRPERN
APPAREIL DE CRÉATION D'UN RACCORD BOUT À BOUT ENTRE CORPS TUBULAIRES

(30) Priority: 22.07.2011 IT PI20110082
(43) Date of publication of application: 28.05.2014
(73) Proprietor: GA.VO. Meccanica S.r.l., 51036 Larciano (PT) (IT)
(72) Inventor: TANCREDI, Antonio, I-51035 Lamporecchio (PT) (IT); BENVENUTI, Stefano, I-51035 Lamporecchio (PT) (IT)
(74) Representative: Celestino, Marco
(86) International application number: PCT/IB2012/053744
(87) International publication number: WO 2013/014601

(56) References cited:
- WO-A2-2008/114115

## Description

### Field of the invention

The present invention relates to an apparatus for executing butt connections between two tubular bodies arranged aligned behind each other, for example tubular cores for supporting coils of wound material.

The invention relates also to an apparatus for sawing the tubular body obtained with this joint into predetermined lengths.

### Description of the technical problem

Apparatuses are known for making a butt connection between two tubular bodies arranged aligned behind each other, in such a way that the front end portion of a preceding tubular body, according to a load conveying direction, abuts against the rear end portion of a subsequent tubular body. The connection is made by winding at least one layer of an adhesive tape about the two mutually abutting end portions. The adhesive tape is wound by firstly approaching an edge of the adhesive tape to the two mutually abutting end portions, and by subsequently causing the two cores to rotate, such that the adhesive tape is dragged and wound to form the butt connection.

Once the butt connection has been formed, the tape is cut by a cut means, normally a blade cut means. The need is felt of cut devices that allow preparing an edge of the adhesive tape for a subsequent connection, when a cut step is carried out.

Various apparatuses are known that make butt connections between tubular elements according to the above-summarized process. An example is provided by the Italian patent application IT1314837, as well as by international patent application WO2008/114115.

These apparatuses, as well as other prior art apparatuses, have the drawback of not allowing sufficiently precise and repeatable adhesive tape cut steps. In particular, the adhesive tape occasionally remains stuck on the blade cut means: this requires stopping the machine in order to clear the blade and to restore the connection means. This is a critical item in the case of automatic machines, that are not guarded or are only occasionally guarded, in which the standstill condition can be detected only after a certain number of minutes after the event, which causes unacceptable standstill times.

Moreover, the prior art apparatuses may sometimes give rise, after the tape has been cut, to irregular connection edges for a new connection, which may affect the connection or the quality and/or the look of the same.

In particular, these problems may take place when unwinding the roll of adhesive tape that is usually provided in the connection means, if the tension of the adhesive tape is not suitably corrected, by increasing it while the roll is being unwound, by a friction means that is normally provided between the roll and the hub around which the roll rotates, in order to allow the tape to be unwound and pulled out. The cut blade hardly cuts a tape that is not stretched enough, and forms irregular tape edges, or even does not cut or remains stuck on the tape itself after the cut.

### Summary of the invention

It is therefore a feature of the present invention to provide an apparatus to make butt connections between tubular bodies by an adhesive tape, in particular butt connections between cores for coils of wound material, which allows to cut the adhesive tape, after each connection step, more precisely and regularly than the prior art apparatuses.

It is a particular feature of the present invention to provide such an apparatus that makes it possible to obtain, after each connection step, connection edges that are more similar to one another, with respect to prior art apparatuses.

It is also a feature of the present invention to provide such an apparatus that solves the problem of the adhesive tape that sticks on the cut means, typically on a cut blade, once the tape has been carried out, at the end of the connection operation.

It is then a particular feature of the invention to provide such an automatic, substantially unguarded machine, which remarkably reduces the machine still-stand time for restoring the tape cut means of the connection station.

It is also a feature of the present invention to provide such an apparatus that allows suppressing or substantially limiting the periodic adhesive tape tension adjustment operations while the tape of a roll is being consumed, to assist the tape cut.

It is another particular object to provide an apparatus for transversally sawing the connected tubular bodies into predetermined lengths.

A further feature of the invention is to provide an apparatus for feeding the cores that allows an automatic connection and cut operation regardless the diameter of the cores.

These and other objects are achieved by an apparatus for making a butt connection between tubular bodies, in particular between tubular cores for coils of wound material, comprising:
- a connection station;
- a tubular body feed means arranged to position a first tubular body and a second tubular body in alignment with each other with a front end portion of the second tubular body adjacent to a rear end portion of the first tubular body at a connection position of the connection station;
- a rotation means for bringing and maintaining the first tubular body and the second tubular body into / in rotation integral to each other and about a common longitudinal axis, at the connection position,
wherein the connection station comprises:
- an adhesive tape slide supplier arranged to expose a free edge of the adhesive tape towards the connection position;
- a slide supplier actuation means arranged to bring the slide supplier closer to the connection position, and to bring the free edge to the connection position, such that, by operating the rotation means, the free edge is dragged by the rotating tubular bodies and adheres on the tubular bodies, thereby making the butt connection of the tubular bodies, wherein the front end portion is connected to the neighbouring rear end portion, forming a connected tubular body;
- a cut means for cutting the adhesive tape;
- a tape-tensioning means for creating a predetermined tension of the adhesive tape while the free edge is being dragged, such that, by bringing the cut means into contact with the adhesive tape stretched while the free edge is being dragged, the adhesive tape is cut, thereby creating a free edge exposed towards the connection position;
wherein the slide supplier comprises a roll the adhesive tape, the roll rotatably arranged about an own rotation axis,
the main feature of this apparatus being that the tape-tensioning means comprises a tape-retaining means for retaining the adhesive tape arranged outside of the roll of the adhesive tape. This way, as said above, the tape is subject to stretch conditions that are unaffected by the outer diameter and by the consumption of the roll, which produces the previously mentioned advantages.

Advantageously, the apparatus comprises a program means for operating the slide supplier actuation means to move the slide supplier away from the connection position and for actuating the cut means, wherein the program means is configured for sequentially performing:
- a first return stroke of the slide supplier away from the connection position, such that the tape is dragged and tensioned during the first stroke;
- a tape cut step, by actuating the cut means;
- a second return stroke of the slide supplier away from the connection position, such that the free edge of the tape is brought to a predetermined distance from the cut means. This way, the new tape free edge, as it is obtained after the cut, is brought to a predetermined distance from the cut means, with the advantages explained above. Furthermore, this distance cooperates with the tension uniformity, which is obtained by the peripheral tensioning, to ensure that conditions and result of the adhesive tape cut step are similar and repeatable after each connection operation.

In an exemplary embodiment, the tape-retaining means comprises a surface of a roller that is arranged to create a predetermined friction with a non-adhesive surface of the adhesive tape. This is an easy way for obtaining the above mentioned peripheral tensioning.

Preferably, the roller surface is a knurled surface.

Preferably, the slide supplier comprises a vertical portion that is equipped with an engagement means, not shown, of the slide for engaging with a straight guide integral to the frame of the apparatus. Such guide can be arranged on a vertical support wall that is integrally connected to the frame.

The straight guide is arranged to allow movements according to a direction that is transversal with respect to the longitudinal conveying and alignment direction of the tubular bodies proximate to the connection position. The slide can be operated by an actuation means of known type, in particular by a cylinder that is integral to the frame, and by a piston slidably arranged within the cylinder and joined with an extension of the slide, for instance, through a hinge means.

In alternative to the pneumatic actuation means, a hydraulic actuation means or an electric actuation means such as a linear motor may be provided for displacing the slide means, or the like.

Advantageously, the peripheral tape-tensioning means comprises a first cylinder and a second cylinder, that are rotatably arranged, preferably in an idle way, about respective rotation axes, which protrude parallel to each other with respect to the rotation axis of the roll and which define, together with the roll, a tape unwinding path, which is wound at first on the first cylinder and then on the second cylinder by an own non-adhesive face. The second cylinder has surface features that can create a predetermined friction with the adhesive tape.

Preferably, the relative position of the axes of the first and of the second cylinder, and of the roll, is selected in such a way that a first winding angle and a second winding angle are obtained and in such a way that a resultant friction force is obtained between the tape and the second cylinder, so that a a predetermined tension i.e. a predetermined stretch of the adhesive tape can be obtained during the operation of the connection station, in particular after the tape cut step that follows a connection step.

Advantageously, the adhesive tape supply means comprises a sensor that is arranged to detect the presence of the adhesive tape.

In an exemplary embodiment, a count means for transmitting a predetermined number of turns to said tubular bodies is associated to the rotation means, the count means comprising:
- a diameter detection means for detecting a diameter value of the tubular bodies;
- a computation means for computing the predetermined number of turns according to this diameter value, the computation means arranged to produce a turn number signal;
- a rotation-actuating means for actuating the rotation means responsive to said signal.

In particular, the rotation means comprises a peripheral dragging roller and the computation means comprises a program means that is configured to:
- learn a number N of layers of adhesive tape to be wound about the tubular bodies;
- compute a number n of turns that the rotation means must be forced to carry out according to the equation n=N*D/d, where d is the diameter of the peripheral dragging roller, D is the diameter of the tubular bodies communicated by the detection means;
- transmitting the number of turns n to the rotation-actuating means such that the rotation-actuating means actuates the predetermined number of turns of the tubular bodies and stops the rotation-actuating means tubular upon completion of the number of turns n.

Advantageously, the peripheral dragging roller comprises:
- a movable support arranged to move radially with respect to the tubular bodies;
- a rubber roller that is pivotally connected to the movable support, the rotation axis of the rubber roller parallel to the axis of the tubular bodies,
- a motor for rotating the rubber roller about its rotation axis, according to a predetermined number of turns;
- a motor means for moving the movable support in order to bring the rubber roller into contact with the side surface of the tubular bodies.

The transmission means may also comprise a transmission roller for transmitting the rotation movement from the preceding tubular body to the subsequent tubular body, in particular an idle roller contacting the preceding tubular body and the subsequent tubular body, which is brought into rotation by the preceding tubular body and brings into rotation the subsequent tubular body.

Preferably, the transmission roller of the connection station is mounted on a support that can be moved towards / away from the tubular bodies. In particular, the support is selected from the group consisting of:
- a driven support, for automatically bringing the transmission roller into contact with the tubular bodies;
- a manual lever support, for manually bringing the transmission roller into contact with the tubular bodies.

Preferably, the tubular body diameter detection means is selected from the group consisting of:
- an automatic diameter measure-reading means;
- a detection means for acquiring a predetermined diameter data measure;
- a combination of automatic reading means and of a detection means in which a means is provided for checking that the predetermined diameter matches with the automatically read one.

In an exemplary embodiment, the apparatus is configured for making a butt connection of tubular bodies and for transversally sawing the connected tubular body into predetermined lengths, and also comprises:
- a sawing station equipped with a saw means for transversally sawing the connected tubular body;
- a conveying means having a longitudinal direction defined by the longitudinal axis up to the sawing station, the conveying means arranged to convey the connected tubular body until the front end portion of the connected tubular body has gone beyond the saw means by a predetermined pitch;
in order to obtain a portion of tubular body of the same length as the pitch. This way, the apparatus allows obtaining salvage tubular body elements from pieces of tubular body, in particular said salvage tubular body elements are well-suited to provide cores for supporting a roll of wound material, and have a mechanical strength and other features that are comparable with the features of tubular bodies that are obtained by simply sawing a new tubular rod into a desired length, which reduces the scraps.

Preferably, the longitudinal conveying means comprises two auto-centring rollers arranged at opposite sides with respect to the connected tubular body, and pivotally connected to respective supports that are configured to engage and close the auto-centring rollers on the connected tubular body by laterally pushing the auto-centring rollers against the connected tubular body, and to open and disengage the auto-centring rollers away from the connected tubular body, wherein a first roller of the rollers is a driven roller and a second roller of the rollers is an idle roller, the supports arranged to be closed and preferably opened by an actuation means, wherein an encoder is associated with at least one of the rollers for measuring the longitudinal advancing movement of the tubular bodies and/or of the connected tubular body towards the connection station and/or towards the sawing station.

In an exemplary embodiment, each support comprises an arm rotatably arranged about an axis and has a free end connected to a respective roller of the above-described rotating rollers.

Advantageously, the tubular body diameter detection means comprises a diameter detection means that include an angular position sensor, in particular a potentiometer, which is preferably mounted on the axis of one of the rotating arms.

The angular position sensor can be mounted on the rotation axis of the rotating arm that holds the idle roller.

Advantageously, the second driven roller is wheeled by an electric motor means selected from the group consisting of:
- a motor-reduction gearbox assembly equipped with an asynchronous motor;
- a stepper motor.

In particular, the two auto-centring rollers are coated with Vulcolan.

Advantageously, the sawing station comprises:
- a carriage slidably arranged along a direction transversal to the longitudinal direction;
- a toothed circular blade that is arranged perpendicularly to the longitudinal direction and is mounted on a support mounted on the carriage;
- a means for moving the slidable carriage;
- a means for bringing the circular blade into rotation.

In particular, the means for moving the carriage comprises a speed hydraulic control cylinder.

Advantageously, the means for moving the carriage comprises a means for actuating a fast approach stroke and a slow cut stroke.

Advantageously, the sawing station comprises a position sensor that is configured to detect the position of the slidable carriage, in a transversal direction.

Advantageously, a means is provided at the sawing station for reversing the rotation speed of the tubular body during the saw step once the tubular body has rotated by a predetermined angle. This way, it is possible to obtain a very high saw precision.

In particular, the predetermined angle exceeds 360°, in particular it is set between 380° and 390°.

In particular, the means for bringing the circular blade into rotation comprises an asynchronous motor.

Advantageously, the apparatus comprises an abutment means for stopping the front end portion of the second body at a predetermined position when the saw means is being operated, the abutment means comprising:
- an abutment carriage slidably arranged along the longitudinal direction;
- an abutment member connected to the abutment carriage and perpendicularly arranged with respect to the longitudinal direction;
- a means for moving the abutment carriage;
- a suction means for aspirating chips that are produced when the saw means is being operated.

The suction means may comprise a suction duct that has one end in pneumatic communication with a suction opening on the abutment member.

In particular, the abutment carriage comprises a position sensor.

In an exemplary embodiment, the tubular body feed means comprises an elongated body that has a star-shaped cross section, said elongated body arranged to rotate about an own longitudinal axis parallel to the longitudinal axis of the tubular bodies, the elongated body comprising at least three continuous radial protrusions, in particular four protrusions typically arranged at 90° with respect to one another.

The continuous protrusions may extend along the whole length of the elongated body.

In an exemplary embodiment, the tubular body feed means has a push means for pushing the tubular bodies along the longitudinal axis, the push means comprising:
- a motorized carriage that is slidably arranged along the longitudinal axis of the tubular bodies, the carriage configured for carrying out a first positioning stroke;
- an approach device that is operatively in contact with the rear end portion of the tubular bodies and is preferably mounted on the motorized carriage, which comprises an actuator movably arranged with respect to the motorized carriage along the longitudinal axis, for carrying out a further fine positioning stroke.

In particular, the approach device comprises at least two small aligned idle rollers that have a rotation axis perpendicular to the longitudinal axis of the tubular bodies, wherein the rollers are operatively in contact with the rear end portion.

In an exemplary embodiment, the tubular body feed means may comprise a rolling cradle consisting of a couple of rollers parallel to each other. The rollers, which are preferably idle, are mounted at a height below the longitudinal axis of the star-shaped body, such that, after a predetermined rotation of the star-shaped body, a tubular body is released on the cradle. The tubular body feed means may also comprise a means for pushing the tubular bodies against the rolling cradle, said push means comprising a vertical pushing element that is arranged to push against the tubular bodies opposite to the rolling cradle. The push means serves for keeping particularly long tubular bodies aligned during the rotation thereby causing them to rotate about their own axis and to remain in contact with the cradle.

In particular, the vertical pushing element may be mounted on the motorized carriage.

The vertical pushing element may comprise a fork that is radially slidable with respect to the tubular bodies, said fork having a free end that is oriented towards the rolling cradle, the free end comprising at least two small idle rollers that are arranged to be rotatably dragged by the rotation of the tubular bodies on the rolling cradle. Moreover, a motor means is provided for radially moving the fork. In particular, the motor means is selected from the group consisting of:
- a pneumatic linear actuator;
- a hydraulic linear actuator;
- an electric motor.

### Brief description of the drawings

The invention will be now shown with the following description of an exemplary embodiment thereof, exemplifying but not limitative, with reference to the attached drawings in which:
- Fig. 1 shows an example of an apparatus, according to the invention, for making a butt connection and also for sawing tubular bodies that are intended for supporting coils of wound material;
- Fig. 2 shows in detail a pusher of such an apparatus;
- Fig. 3 shows diagrammatical perspective views of auxiliary components of a tape connection station, in a first mode of winding the tape;
- Fig. 4 shows views perspective diagrammatical view of components auxiliary a tape connection station, in a second mode of winding the tape;
- Figs. 5 to 11 are diagrammatical perspective views of a connection station in subsequent steps of an operation of making a butt connection of tubular bodies;
- Figs. 12A to 12C are diagrammatical side views of a connection station in three steps of an operation of making butt connections of tubular bodies;
- Fig. 13 shows a convey station of such an apparatus;
- Fig. 14 shows a sawing station of such an apparatus;
- Fig. 15 shows a possible arrangement of proximity sensors along the longitudinal direction;
- Fig. 16 shows a flow-sheet that describes the operation of the apparatus according to the invention for counting and transmitting a predetermined number of turns of the tubular body in the connection station.

### Description of a preferred exemplary embodiment.

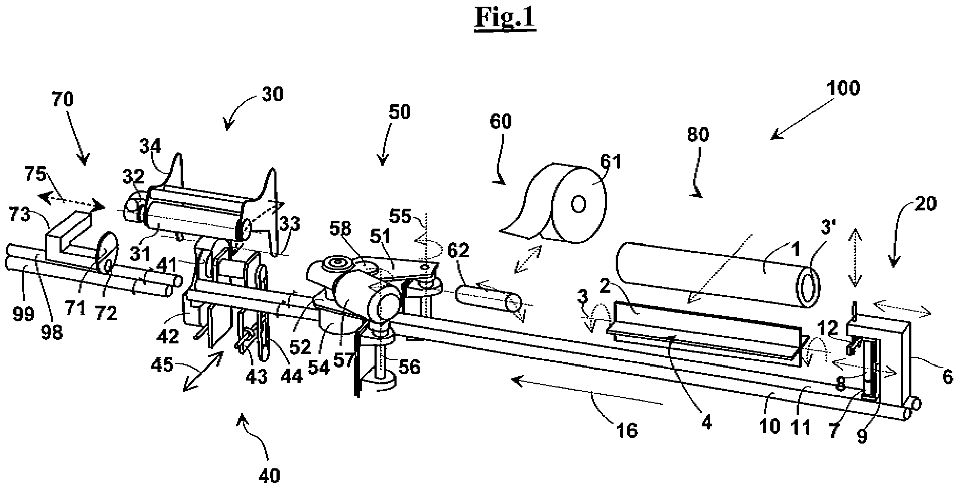

With reference to Fig. 1, an apparatus 100 is described for making a butt connection and for transversally sawing tubular bodies 1 that are suitable, in particular, for supporting coils of wound material. These tubular bodies can be made of different materials, such as pressed cardboard or plastic materials such as PVC. For example, the tubular bodies may be tubular cores suitable for supporting a coil of wound material, to which reference is made hereinafter.

Apparatus 100 comprises a loading station 80 that is provided with a means for feeding tubular cores 1, the feed means configured for positioning one tubular core at a time on a rolling cradle consisting of two parallel horizontal rollers 10,11. The feed means comprises a driven star-shaped feeder 4 that has, for instance, four continuous protrusions 2 that allow loading tubular cores of different lengths. The fact that protrusions 2 are continuous allows loading tubular cores 1 of a length set between a few centimetres and a maximum length, without any manual adjustment.

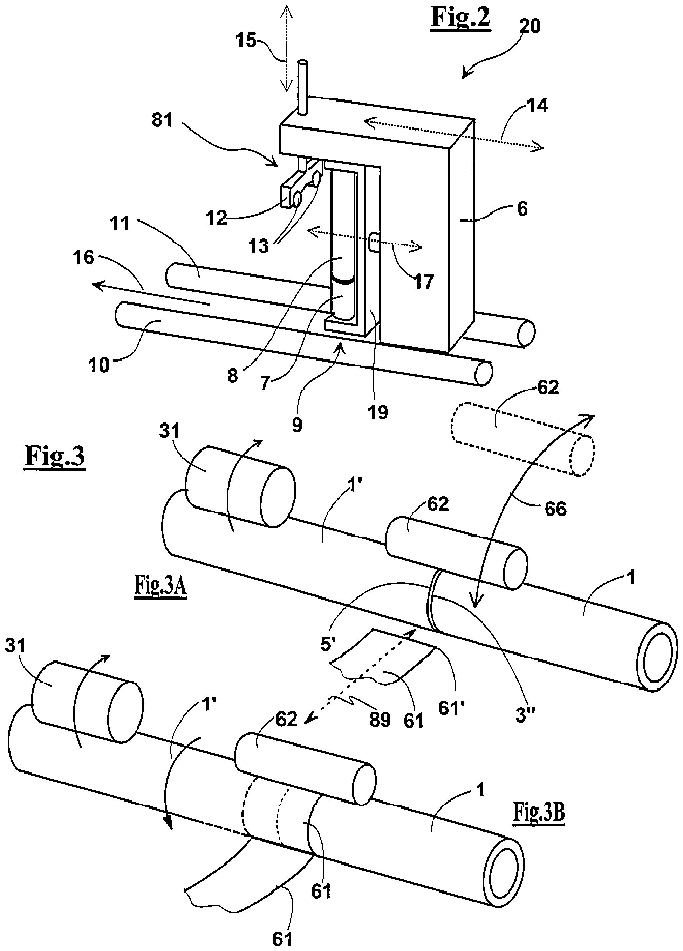

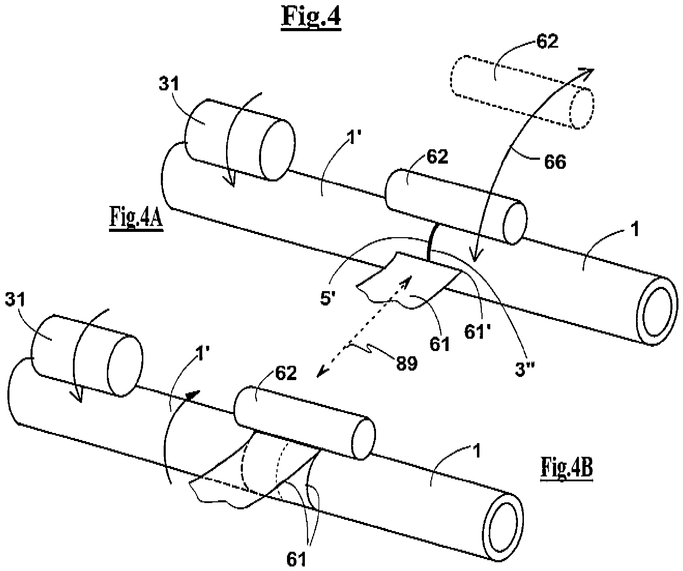

Rollers 10,11 of the rolling cradle are arranged along a longitudinal direction 16, as well as the axis of the cores while manufacturing and handling the cores themselves. The apparatus comprises a push means for pushing tubular elements 1 along longitudinal direction 16. In an exemplary embodiment, the push means comprises a pusher 20, which acts against a rear end portion 3' of a second core 1, once this has been loaded on rolling cradle 10,11, in order to bring a front end portion 3" of a second core 1 loaded after a first core 1 on a connection station 60. First core 1 may be a core portion as this is obtained by a sawing step carried out on apparatus 100, if this is equipped with a sawing station, as indicated hereinafter. In this case, connection station 60 houses a rear end portion 5' of a core portion 1' to be butt-connected with second core 1, loaded after core portion or core 1' (Figs. 3 and 4).

As shown in Fig. 2, pusher 20 comprises a carriage 6 that is slidably arranged on guides, not shown, along longitudinal direction 16, and also comprises an approach device 9, for example a pressure-adjustable pneumatic approach means that has vertical idle rollers 7,8. Since rollers 7,8 are operatively in contact with rear end portion 3' of second core 1, a free rotation of second core 1 is allowed about its own axis, which keeps the second core in contact with approach device 9 during the rotation. Vertical idle rollers 7 and 8 are mounted on a bracket 19 that is movable according to arrow 17 along longitudinal direction 16 with respect to pusher 20 by a piston, not shown.

Pusher 20 also comprises a vertical pushing element 81, having two small rollers 13 idle-mounted on a fork 12, which work for keeping particularly long tubular cores aligned during the connection step. In fact, the long rods may often be slightly bent, therefore, if they rotate without the action of pushing element 81, they risk to hit against idle rollers 10,11 and, in particular, to fall from cradle 10,11. Pushing element 81 forces second core 1 to rotate about its own axis. Pushing element 81 is operated by a control software preferably when long cores are produced and when the loading is carried out by an automatic loading unit. Actually, the loading may be carried out manually, or automatically.

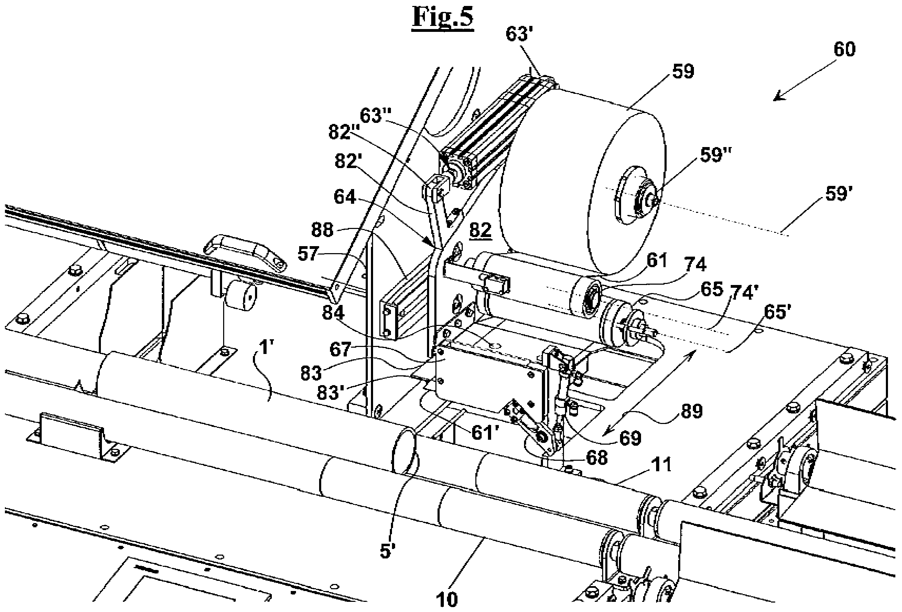

With reference again to Fig. 1, apparatus 100 comprises a connection station 60 equipped with an adhesive tape 61 supplier that is shown only diagrammatically in Figs. 1, 3 and 4, and more in detail in Figs. 5 to 11.

In particular, Figs. 3 and 4 show an auxiliary connection means that comprises an idle transmission roller 62 and a peripheral dragging roller 31, also shown in Fig. 1. Peripheral dragging roller 31 is arranged to bring and maintain first core 1' or core portion 1' into / in rotation about their own axis, while transmission roller 62 is used for rotating also second core 1 about its own axis, integrally to first core 1' or core portion 1'. To this purpose, a means is provided for lowering idle transmission roller 62 in the direction indicated by arrow 66, until the transmission roller is brought into contact with first core 1' or with core portion 1' and with second core 1. This way, it is possible to bring and to maintain front end 3" of second core 1 and rear end portion 5' of first core 1' or of core portion 1' indirectly into / in contact with each other, such that tubular core 1 can rotate about its own axis integrally with first core 1' or with portion 1', which is caused to rotate by peripheral dragging roller 31.

The tape connection means comprise also a connection station 60, described in detail hereinafter, comprising an approach means for approaching a free edge 61' of adhesive tape 61 to end portions 3", 5' to be connected, according to a direction indicated by arrow 89, such that adhesive edge 61' is in contact with the end portions of tubular elements 1',1 to be connected. This way, when tubular elements 1',1 are brought into rotation by dragging roller 31, adhesive tape 61 is dragged and wound for a predetermined number N of layers on the end portions of tubular elements 1',1, thereby obtaining the butt connection between tubular elements 1',1. As described more in detail hereinafter, while adhesive tape 61 is being wound on the end portions of tubular elements 1',1, adhesive tape supplier 61 is moved away from the connection zone, i.e. from rotating tubular elements 1',1, still according to the direction of arrow 89, and adhesive tape 61 is cut, so that N adhesion layers are provided.

In particular, Fig. 3 shows an exemplary embodiment in which free edge 61' of adhesive tape 61 joins with tubular elements 1',1 at lower generatrices of tubular elements 1',1, and tubular elements 1',1 rotate counterclockwise as seen by an observer that looks at tape 61 arranged on the left of tubular elements 1',1, while Fig. 4 shows an exemplary embodiment in which free edge 61' of adhesive tape 61 joins with tubular elements 1',1 at upper generatrices of tubular elements 1',1, and tubular elements 1',1 rotate clockwise as seen by the same observer.

With reference to Fig. 5, a connection station 60 is described that comprises a slide 64 including a vertical portion 82 that is provided with an engagement means, not shown, for engaging slide 64 with a straight guide 88 integral to the frame of apparatus 100. Guide 88 is arranged, for instance, on a vertical support wall 57 that is integrally connected to the frame of apparatus 100. As indicated by arrow 89, straight guide 88 is arranged to allow slide 64 to move transversally to cores longitudinal advancing direction 16, with respect to which the cores are aligned. Slide 64 may be operated by an actuation means 63 of known type, in particular, in an exemplary embodiment shown in Figs. 3 and 4, actuation means 63 comprises a cylinder 63' integral to the frame of apparatus 100 through wall 57, and a piston 63" that is slidably arranged within cylinder 63' and is connected with an extension 82' of slide 64 by a hinge means 79.

In alternative to pneumatic actuation means 63, a hydraulic actuation means may be provided for displacing slide 64, or an electric actuation means such as a linear motor and the like.

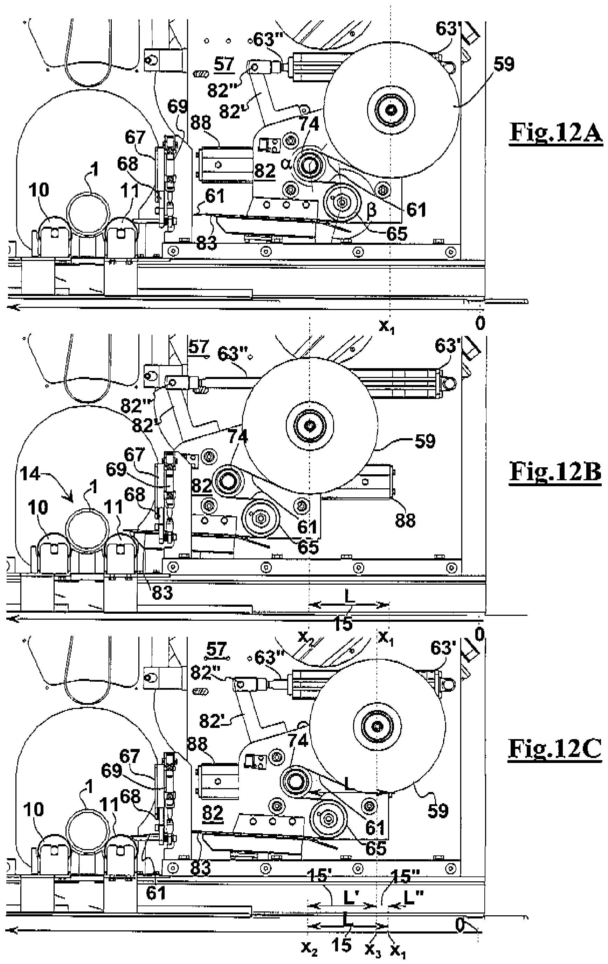

A shaft 59" is perpendicularly cantilevered to vertical portion 82, opposite to wall 57, and defines a rotation axis 59' for a roll 59 of adhesive tape 61. A first cylinder 74 and a second cylinder 65 also protrude from vertical portion 82, which are rotatably arranged about respective rotation axes 74',65', preferably in an idle way, and are parallel to each other and to shaft 59". Roll 59, along with idle cylinders 74 and 65, defines a tape unwinding path 61. As shown more in detail in the side views of Figs. 12A-C, tape 61 is unwound from roll 59 and is wound, by an own non-adhesive face, firstly on first cylinder 74 with a first winding angle α, and then on second cylinder 65 with a second winding angle β. Cylinder 65 has surface features that can cause a predetermined friction with adhesive tape 61. The relative position of axes 59', 74', 65', typically the interaxes L₁ and L₂, determinate the amplitude of winding angles α, β. The features of cylinder 59 and winding angles α,β, in particular winding angle β, are selected such that the friction force that arise between tape 61 and cylinder 65 creates a friction on the tape itself during the operation of connection station 60, in particular after the tape cut step that follows the connection step, as described more in detail hereinafter.

Slide 64 also comprises a support and conveying base 83 for tape 61, said base cantilevered to the lower part of vertical portion 82 of the slide, at the same side of shaft 59 and of idle cylinders 74 and 65. Base 83 is connected to vertical portion 82 of the slide by conventional means, for example by screws. Support and conveying base 83 of tape 61 is provided with through suction holes 84, for instance circular holes, that are in communication with a suction means, not shown from the lower part of the support base. Suction holes 84 make it possible to keep the non-adhesive face of tape 61 in contact with support and conveying base 83, thereby allowing a smooth slide movement of tape 64 on base 83 during the connection step, as described hereinafter.

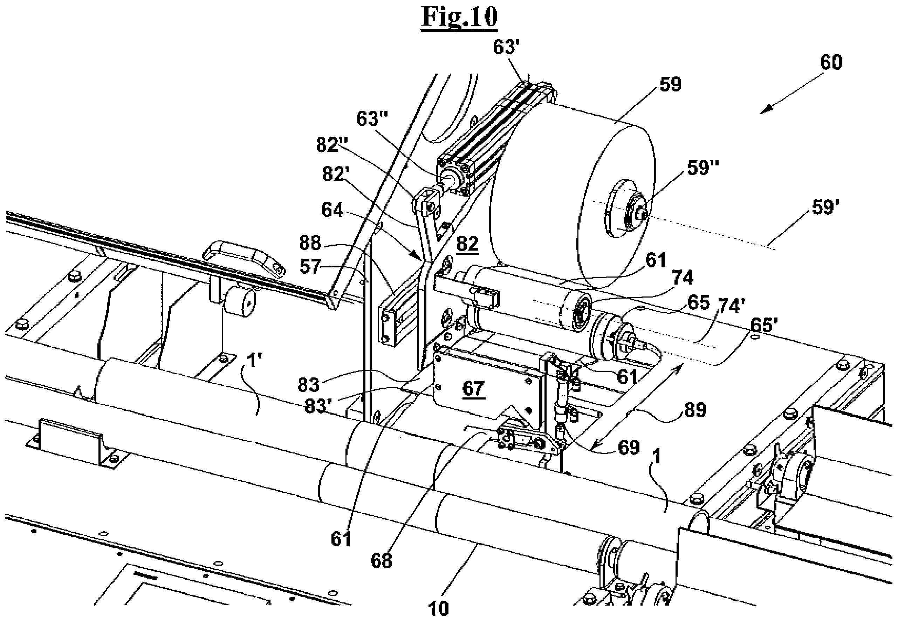

Moreover, cut means 68 of tape 61 are provided integral to slide 64, which can be actuated between a rest position and a cut position. In the shown exemplary embodiment, the cut means comprises a blade 68 hinged at a point and pivotally arranged between a raised position of rest, as shown in Fig. 5, and a cut position, as shown in Fig. 10. Blade 68 is movably arranged with its own cut profile along a plane that is transversal with respect to the slide movement direction of slide 64, at a predetermined distance from the side front 84' of support and conveying base 83, obviously outside of base 83.

In order to actuate blade 68 between the rest position and the cut position, an actuation means is provided that comprises, in the example shown, a pneumatic piston 69, for instance a simple effect pneumatic piston that has a positive effect to move blade 68 from the rest position to the cut position, said piston preferably equipped with a return spring, not shown, for causing blade 68 to return from the cut position to the rest position. In alternative, a double-acting cylinder may be provided for moving blade 68 according to the two opposite directions.

Slide 64 also comprises a protection case or carter 67 that is formed, in the example shown, by two plane and preferably parallel elements 67',67", which define a space adapted to receive blade 68 in the rest position shown in Figs. 3B and 4B.

As shown in Figs. 10 and 12C, in the cut position the blade has a downward slope with a cut end that cuts adhesive tape 61 in an intermediate region, at a distance from the edges of tape 61.

In alternative to blade 68, a different cut means may be provided, for example a heat means.

In the embodiment shown in Figs. 5 to 11, a presence sensor is also provided for detecting the presence of the adhesive tape on tape support and conveying base 83. This sensor serves, in particular, for checking whether adhesive tape 61 has run out. In particular, the presence sensor may comprise an optical, i.e. a reflective photocell sensor, wherein a sender/receiver element 85' is arranged integral to slide 64, for instance it is connected to vertical portion 82 by an arm 86, for emitting a light beam, not shown, towards base 83, which has a hole 87 which lets the light beam cross base 83 and reach a reflective element 85" of the presence sensor only in case of absence of tape on base 83, and which lets a light beam, which is reflected by the reflective element, reach sender/receiver element 85', always still only in case of absence of tape on base 83. The presence sensor is associated with a control means that generates an alarm and/or causes the apparatus to stop if an absence of adhesive tape 61 on support and conveying base 83 is detected. Actually, the control means stops the apparatus and informs an operator that the roll of adhesive tape 61 must be changed.

Fig. 5 relates to a condition of apparatus 100 in which a previously loaded core or core portion 1' has its own rear end portion 5', with respect to movement direction 16, at the connection station. Behind core or core portion 1', cradle 10,11 is clear, therefore both rollers 10,11 are visible. Slide 64 is located at a rear position, where piston 63", which forms, together with cylinder 63', slide supplier actuation means 64 according to direction 89, is substantially contained within cylinder 63'. A free portion of adhesive tape 61 is brought and maintained into / in contact with support and conveying base 83 through its own non-adhesive face, in particular thanks to the suction through holes 84, of which one is shown in Fig. 5. The end edge of this free portion of adhesive tape, as obtained by a previous cutting step, is located at a rear position with respect to core 1', and is available for a subsequent connection step. The same condition of the apparatus is shown in Fig. 12A, in an elevation side view of slide 64.

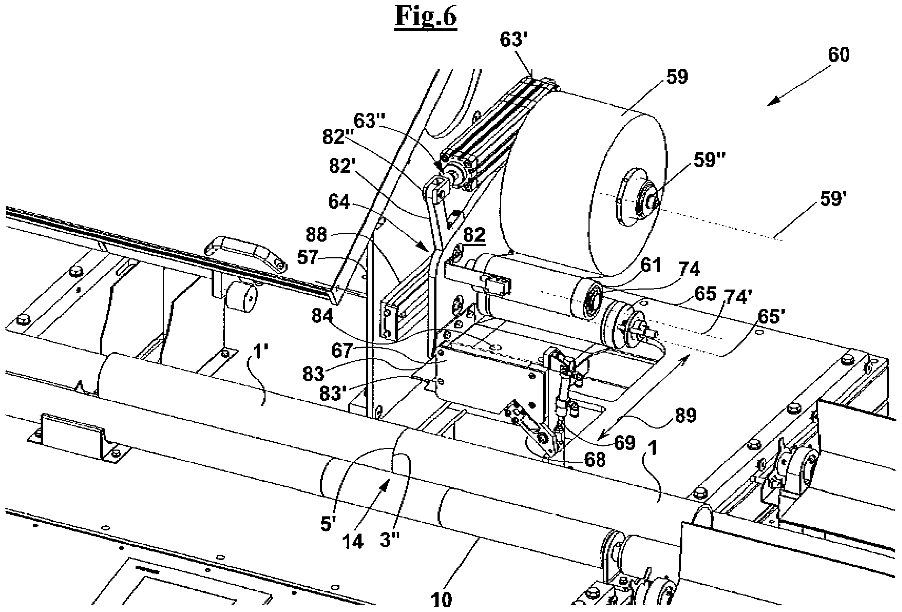

Fig. 6 shows a condition of the apparatus, following the condition of Fig. 5 in a working program, in which a subsequently loaded core 1 abuts with its front end portion 3" against rear end portion 5' of the core or of first core 1' or of core portion 1' of Fig. 5, at a connection position 14 of connection station 60. Slide supplier 64 tape 61 is located at the same position where it was located in Fig. 5 and 12A.

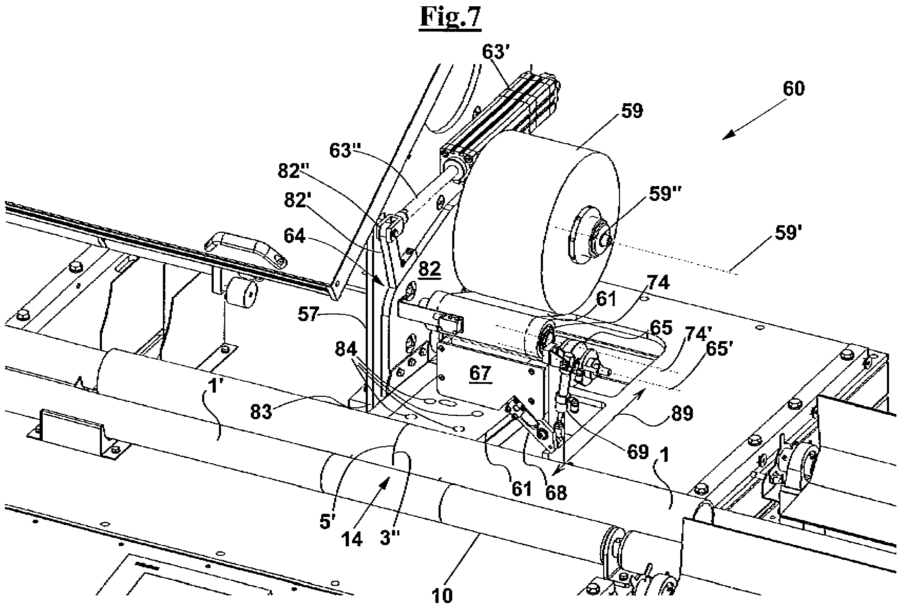

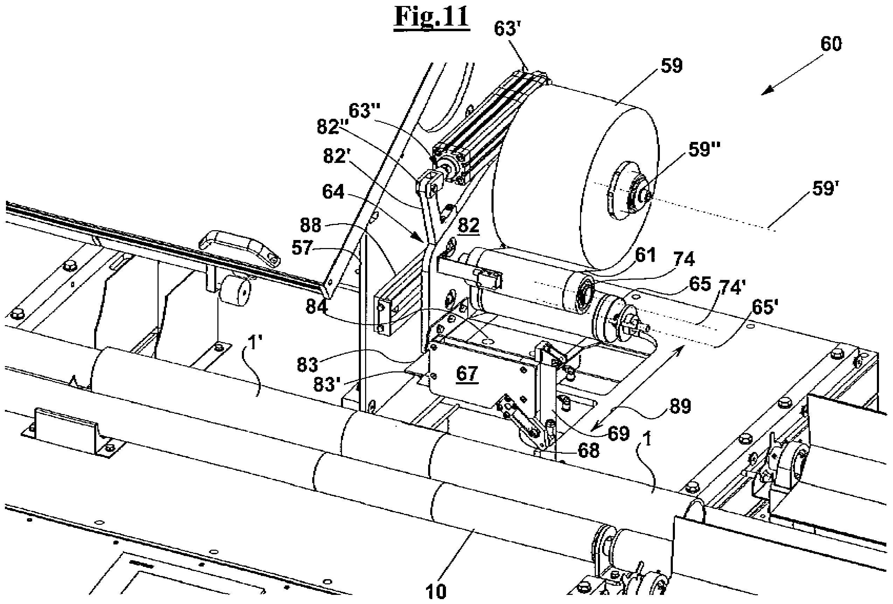

Fig. 7 shows a condition of the apparatus, following the condition of Fig. 6 in a working program, in which slide supplier 64 of tape 61 has carried out a stroke or displacement 15 to approach connection position 14, i.e. to approach tubular elements 1',1, according to direction 89. Piston 63" protrudes now from cylinder 63 by a length corresponding to the length L of stroke 15 that has been carried out by slide 64. Length L is shown in Fig. 12B, where the same condition of the apparatus is shown as in Fig. 7 in an elevation side view of slide 64. The position x₂ of any point of the slide, for example, of a point of axis 59' of rotating roll 59, is displaced by a distance L with respect to the position x₁ of Fig. 12A towards connection position 14. In an exemplary embodiment, length L of approach stroke 15 is set between 120 and 130 mm, in particular it is about 125 mm. In the condition of the apparatus as shown in Figs. 7 and 11B, edge 61' of adhesive tape 61 is located proximate to the surface of cores 1 and 1', therefore a rotation of integral tubular elements 1',1 about their own axes, through dragging roller 31 and transmission roller 62, causes adhesive tape 61 to be dragged.

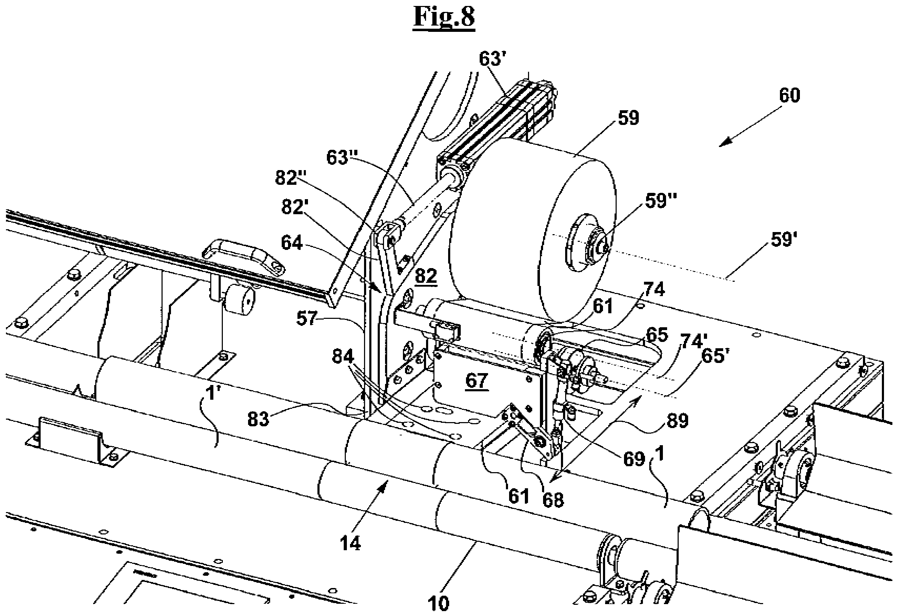

In Fig. 8 a condition of the apparatus is shown in which this dragging step is in progress, i.e. in which the connection of tubular elements 1',1 is in progress, at connection position 14. By this dragging step, the tape is wound and adheres, on end portions 3", 5' of tubular elements 1',1, thereby making them integral to each other. The tape is dragged along support and conveying base 83 and is unwound from roll 59. Cylinder 74 acts as a peripheral friction member, i.e. it causes, together with the dragging by rotating tubular elements 1',1, a tension in tape 61, which is substantially independent from the diameter of roll 59 and, therefore, is substantially independent from the amount of tape 61 that is present or left in roll 59. In Fig. 8, slide supplier 64 of tape 61 is shown in the same position as in Fig. 11B, i.e. it is shown at a position of maximum approach to connection position 14. However, during such connection step, a first return stroke 15' of slide 64 may take place.

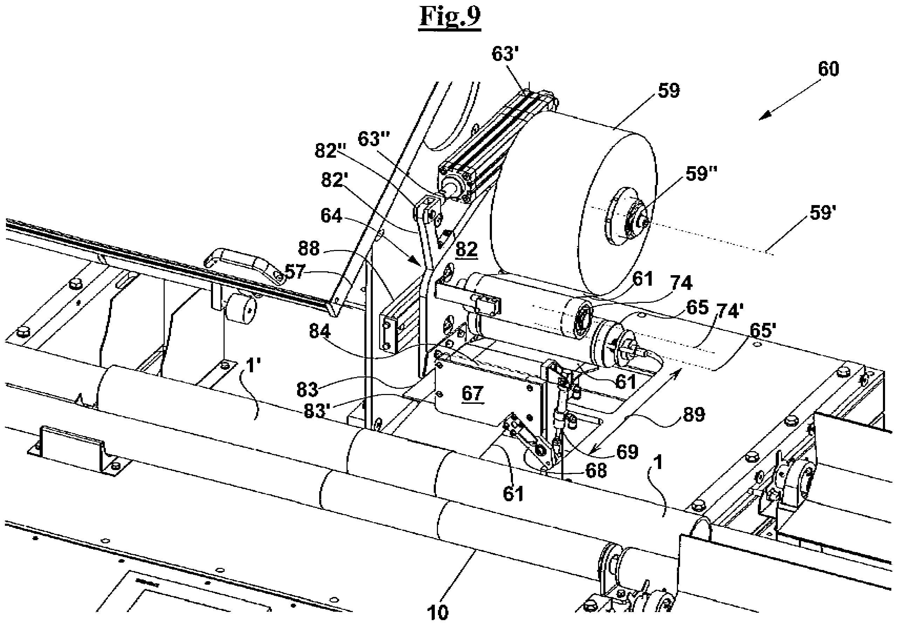

Fig. 9 shows a condition of the apparatus, following the condition of Fig. 8 in a working program, in which slide supplier 64 of tape 61 has carried out a first return stroke 15' from connection position 14, i.e. from tubular elements 1',1, according to direction 89. Piston 63" protrudes now from cylinder 63 by a length corresponding to length L of approach stroke 15 minus the length L' of first approach stroke 15' performed by slide 64. The length L' is shown in Fig. 12C, where the same condition of the apparatus is shown as in Fig. 9 in an elevation side view of slide 64. The position x₃ of axis 59' of rotating roll 59 is displaced by a distance L' with respect to position x₂ of Fig. 12B, in a direction away from connection position 14. In an exemplary embodiment, the length of first return stroke 15' is set between 70% and 90% of length L of approach stroke 15 towards connection position 14, in particular 120 and 130 mm, in particular it is set between 75% and 85%. In an exemplary embodiment, in which length L of approach stroke 15 is about 125 mm, the length of first return stroke 15' is set between 95 and 105 mm, in particular it is about 100 mm.

In Fig. 10 a condition of the apparatus is shown in which the cut of tape 61 is in progress, carried out by blade 68 that comes out of protection case 67, actuated by pneumatic actuation means 69. The position of slide 64 is the same as shown in Fig. 9 and in Fig. 12C, i.e. it is a position before the position of maximum displacement towards tubular elements 1',1 at a same distance as length L'. The tension that is created in the adhesive tape due to the dragging by tubular elements 1',1, and due to the friction on the friction cylinder 65 makes the tape cut step insensitive to the size of roll 59, i.e. to the amount of adhesive tape 61 that is left on roll 59, thereby making it unnecessary to adjust the tension of the adhesive tape while tape 61 is consumed in the subsequent connection steps, obtaining nevertheless the same cut precision.

Fig. 11 shows a condition of the apparatus 100, following the condition of Fig. 10 in a working program, in which slide supplier 64 of tape 61 has carried out also a second return stroke 15" from connection position 14, still according to direction 89. This position coincides with the one of Figs. 5 and 6. In other words, length L" of second return stroke 15" is complementary to length L' of first return stroke 15' to form length L of approach stroke 15, i.e. L= L'+L". This relation is shown in Fig. 12C, still with reference to the position of axis 59' of roll 59. This second stroke 15", or additional stroke of slide supplier 64 of tape 61, which takes place once tape 61 has been cut, prevents the tape from sticking on the cut means such as blade 68, which would require a stop of the machine, with the above mentioned drawbacks.

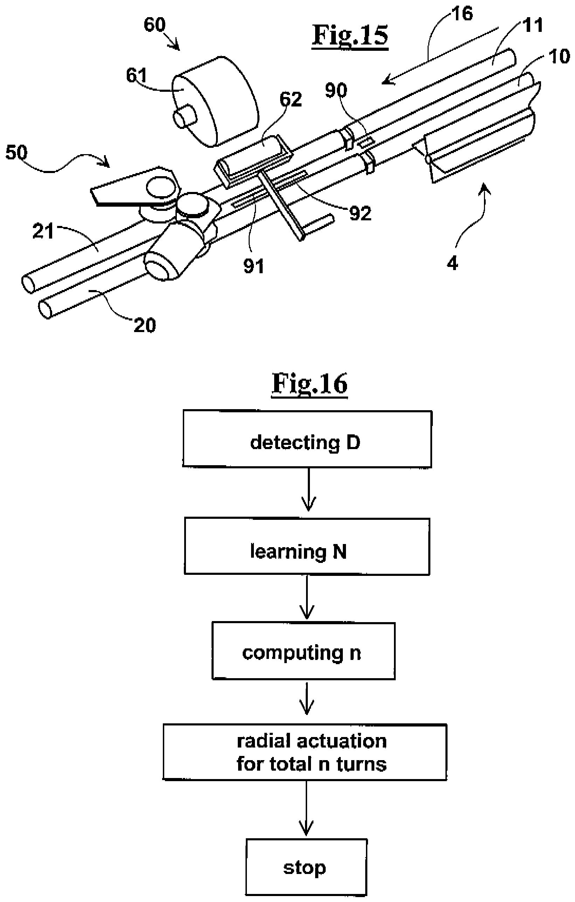

In an exemplary embodiment of the invention, peripheral dragging roller 31 is programmed by a software algorithm that makes it possible to keep the number of tape windings constant at a selected value, regardless the diameter of tubular elements 1',1 being treated. The diameter value and the thickness value of core 1',1 can be selected by the operator by suitable detection means, for instance by a control panel of the apparatus, not shown. As shown in Fig. 16, the algorithm carries out a procedure that comprises a step of detecting the diameter D of tubular elements 1',1 to be butt-connected, through suitable detection means, a step of learning number N of layers of adhesive tape 61 to be wound around abutting end portions 3", 5' of tubular elements 1',1, and then a step of computing a number n of turns of peripheral dragging roller 31 through the equation n=N*D/d, wherein d is the diameter of peripheral dragging roller 31. Furthermore, a step is provided of forwarding the number of turns n to the means for actuating dragging roller 31, so that the latter causes a dragging of tubular elements 1',1, and stops it when the calculated number n of turns is attained.

With reference again to Fig. 1, apparatus 100 also comprises a convey station 50 for conveying connected tubular elements 1',1 along longitudinal direction 16, up to a transversal sawing station 30, until the front end portion of first core 1' or core portion 1' it has gone beyond the transversal sawing station 30 by a predetermined pitch.

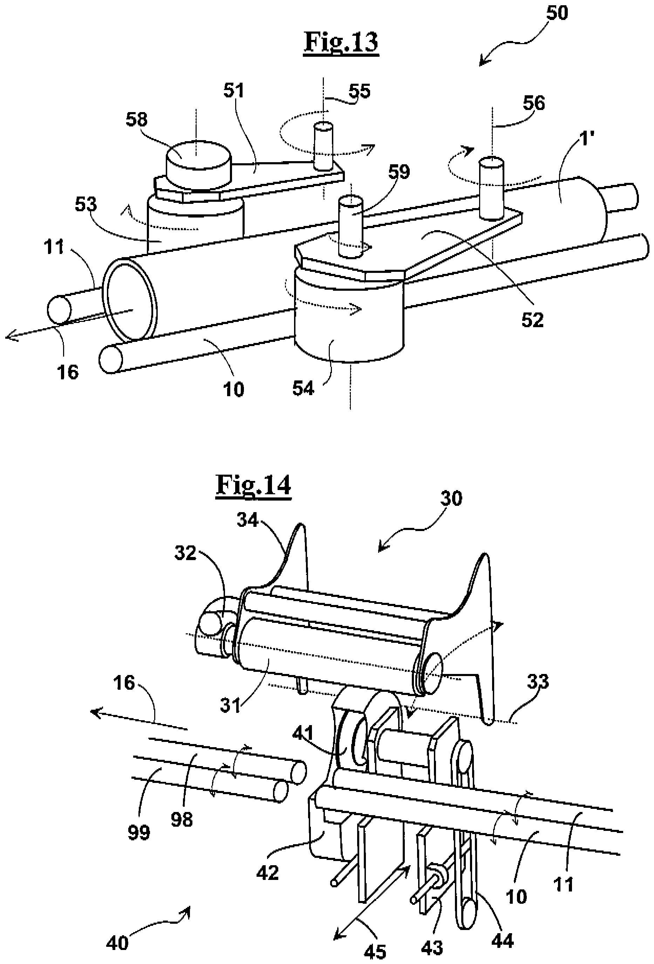

With reference to Fig. 13, convey station 50, according to an exemplary embodiment, comprises two auto-centring rollers 53,54, for instance coated with Vulcolan, which are arranged with respective axes 53',54' vertical and mounted opposite to first core 1' or core portion 1'. Auto-centring rollers 53,54 are preferably operated by a single pneumatic actuation device, comprising for instance a cylinder and a piston, not shown in the figures. Auto-centring rollers 53,54 are mounted on respective support arms 51,52, that are rotatably arranged about respective vertical rotation axes 55,56. In particular, one auto-centring roller 53,54, for example roller 54, is driven in a not shown way, while other roller 53 is idle and is caused to rotate by advancing core 1'. A first encoder 58 is mounted on idle roller 53 in order to control the movement of first core 1' or of core portion 1' or of second core 1 connected to the latter, with the aid of a software program. A potentiometer, not shown, may also be mounted on rotatable support arm 51 of idle roller 53, preferably at axis 55 for electronically controlling the selected core diameter. The potentiometer is configured to measure the approach motion that rotatable arm 51 must carry out so that roller 53 is brought into contact with the core. If the diameter of the core does not correspond to the one that has been selected by the operator, a means is provided for stopping the apparatus and for emitting a code of error that can be displayed to a user.

With reference again to Fig. 1, the apparatus according to the invention also comprises a sawing station, consisting of a core rotation unit 30 and of a saw unit 40. As shown more in detail in Fig. 14, rotation unit 30 comprises driven rubber roller 31, already mentioned when describing connection station 60 and the connection step (Figs. 3 and 4). Rubber roller 31 is arranged to laterally compress second core 1 and to cause the latter to rotate both during the sawing step and during the connection step. Rubber roller 31 can be mounted on a bridge 34, that is provided with a control means comprising a pneumatic cylinder, not shown.

In the exemplary embodiment as depicted, saw unit 40 comprises a toothed circular blade 41 that is preferably operated by an asynchronous motor, not shown, which transmits the movement to circular blade 41, for example through a transmission belt 44. Saw unit 40 is mounted on a carriage 43 that is arranged to move along a direction 45 transversal with respect to longitudinal direction 16, and is preferably operated by a speed hydraulic control cylinder, not shown. The saw unit may also comprise a linear potentiometer, not shown, for controlling the position of carriage 43 and, taking into account the selected core diameter, for controlling the speed of the cores along cradle 11,12, in particular according to an upper speed value for the approaching step, and according to a lower speed value for the cutting step.

Transversal saw disc 41 moves quickly along a transversal direction up to some millimetres from the core that is located on the rolling cradle, then the speed is reduced and the sawing step starts, during which the core rotates in an opposite sense with respect to disc 41 (disc rotates clockwise and tube rotates counterclockwise). After a core rotation of about 380°-390° since the sawing step has started, the rotation sense of the core is reversed (disc rotates counterclockwise and tube rotates clockwise), and the sawing step is completed. This procedure makes it possible to eliminate cut irregularities and residues, i.e. uncut edges within the core, which occur, in particular, when pressed cardboard tubes are sawn, and makes it possible to obtain smoother cut surfaces.

For some materials, such as PVC, the sawing step does not give rise to irregularities and uncut edges, therefore the software may be configured such that the tube is maintained in rotation always in the same sense, for example clockwise, without inversions of the rotation sense. This configuration may be a part of a tube material program.

Sawing station 40 may also comprise a means, such as nozzles, for producing compressed air jets, not shown in the figures, to assist the expulsion of short core portions once these have been sawn away, for example portions shorter than 50 mm, which may be difficult to discharge after the sawing step.

Still with reference to Fig. 1, apparatus 100 may comprise a means for stopping the slide movement of the cores 1 along longitudinal direction 16, for correctly positioning core 1 before the sawing step. As shown in Fig. 1, the stop means may comprise a sliding abutment means 70 that has an abutment member 71 that is transversal with respect to longitudinal direction 16 and is mounted on a motorized carriage, not shown, that slides on a guide according to a direction 75 parallel to longitudinal direction 16. A second encoder may also be provided, not shown, which is arranged to control the position of abutment member 71 to allow the system to adjust the distance of abutment member 71 from transversal saw disc 41, i.e. to adjust the saw length of core 1. Abutment member 71 may have a suction opening 72 that is operatively located in a zone within tubular core 1. In an exemplary embodiment, as depicted, opening 72 is an end portion opening of a tube 73 and is in communication with a suction pump, not shown. Therefore, such a suction type slide abutment means 70 is adapted to longitudinally set in a correct and precise way, and at the same time it is adapted to cause the suction of the chips resulting from the sawing process.

Core 1', after performing a saw cycle, is caused to advance by rubber rollers 53 and 54 of convey station 50 (Fig. 13), at a high speed. The first encoder, not shown, mounted on the convey station, causes core 1' to advance quickly for a distance that is a few centimetres shorter than the selected saw length, then it actuates a deceleration and carries core 1' at a lower speed until the core is brought into contact with abutment member 71. At this point, the core is blocked by lowering rubber roller 30 of the sawing station, while convey cylinders 53 and 54 are opened and the sawing step begins.

After the sawing step, abutment member 71 is caused to return by means of a pneumatic cylinder, not shown, by at least a few centimetres, and the sawn core portion is discharged. Then, abutment member 71 is positioned again in the position that it occupied before the return. The return of abutment member 71 is used as a discharge aid for the core portion.

In Fig. 15 a portion of apparatus 100 is shown, in which a first proximity sensor 90 is arranged upstream of connection station 60 and second and third proximity sensors 91 and 92 are arranged bridging connection station 60, the longitudinal direction movement of the cores being indicated by arrow 16. When first sensor 90 detects the absence of the core, star-shaped feeder 4 (Fig. 1) discharges a first tubular core that falls upon rollers 10,11 of the rolling cradle of the loading station. Pusher 20 (Figs. 1 and 2) pushes forward the core that has just been loaded, until sensor 90 is engaged again.

Then, the already described connection step is carried out, providing a connection between the new core and core portion left at the saw position. Then, the connected core begins to be sawn, and the convey station is actuated until second sensor 91 is disengaged again. When second sensor 91 is disengaged, pusher 20 pushes a new core loaded on the rolling cradle until the new core achieves sensor 92, then the core speed is reduced and the core is pushed until it engages second sensor 91. In this condition, the new core is located at a distance of few millimetres from the core previously arranged on the rolling cradle of the machine.

A this point, pusher 20 stops and the core is pushed to abut against the core portion that is already present on the rolling cradle, by pneumatic approach device 9 of pusher 20. Pneumatic approach device 9 is operated by a pneumatic piston that acts in a longitudinal direction. This way, a slight abut thrust is exerted between preceding core 1' and subsequent core 1 on rolling cradle 10,11, before carrying out the connection step by the tape, and an effective contact is ensured on the head faces 3", 5' facing the two cores 1',1 in succession. The abut thrust can be adjusted by modifying the pressure of the fluid in the pneumatic device that operates approach device 9.

Once the tape connection step has come to its end, subsequent core 1 connected to preceding core 1' is caused to advance by auto-centring rollers 53 and 54 of convey station 50, as shown in Figs. 1 and 13. By measuring the rotation of idle roller 58 itself, first encoder 58, mounted on the axis of idle roller 58 of Fig. 13, makes it possible to cause the core to advance by a predetermined distance, in particular by the same distance as the length selected by the operator, minus a few centimetres.

Then, the speed is lowered and the core is pushed until it reaches abutment member 71 of Fig. 1.

A this point, rubber roller 31 of sawing station 40 is pressed on the core, and auto-centring rollers 53 and 54 of convey station 50 move away from the core and disengage it. Furthermore, circular blade 41 of sawing station 40 is brought into rotation and is caused to advance transversally.

The transversal advancing movement of the circular blade comprises a first quick approach portion, i.e. a first positioning stroke, such that the blade is positioned proximate to the core, and a second saw portion, at a lower speed. The position of the circular blade can be controlled by a linear potentiometer, not shown in the figures.

Before finishing the sawing step, the core rotation speed may be reversed in order to eliminate the uncut edges within the core, and to provide this way a smooth and clean cut surface. As described, the inversion of the rotation speed is necessary for materials such as pressed cardboard, while it can be avoided in the case of tubular cores of a material such as PVC.

Once the sawing step has been completed, the abutment suction 70 of Fig. 1 returns under the action of a pneumatic cylinder, not shown in the figures, and the portion of tubular element that has just been sawn is discharged i.e. it is expelled by lowering one of the rollers of the rolling cradle, in particular of roller 99 of Fig. 1.

The foregoing description of specific exemplary embodiments will so fully reveal the invention according to the conceptual point of view, such that others, by applying current knowledge, will be able to modify and/or adapt in various applications this specific exemplary embodiments without further research and without parting from the invention, and, then it is meant that such adaptations and modifications will have to be considered as equivalent to the specific embodiments. The means and the materials to realise the different functions described herein could have a different nature without, for this reason, departing from the field of the invention. It is to be understood that the phraseology or terminology that is employed herein is for the purpose of description and not of limitation.

## Claims

1. An apparatus (100) for making a butt connection between tubular bodies, in particular between tubular cores for coils of wound material, comprising:
- a connection station (60);
- tubular body feed means arranged to position a first tubular body (1') and a second tubular body (1) in alignment with each other with a front end portion (3") of said second tubular body (1) adjacent to a rear end portion (5') of said first tubular body (1') at a connection position (14) of said connection station (60);
- a rotation means (31,62) for rotating said first tubular body (1') and said second tubular body (1) integrally to each other and about a common longitudinal axis (16) at said connection position (14);
wherein said connection station (60) comprises:
- a adhesive tape (61) slide supplier (64) arranged to expose a free edge (61') of said adhesive tape towards said connection position (14);
- a slide supplier (64) actuation means (63',63") arranged to bring said slide supplier (64) closer to said connection position (14), and to bring said free edge to said connection position (14), such that, by operating said rotation means (31,62), said free edge (61') is dragged by said rotating tubular bodies (1',1) and it adheres on said tubular bodies (1',1), thereby creating said butt connection of said tubular bodies, wherein said front end portion (3") is connected to said rear end portion (5'), forming a connected tubular body (1);
- a cut means (68) for cutting said adhesive tape (61);
- a tape-tensioning means (74,65) for creating a predetermined tension of said adhesive tape (61) while said free edge is being dragged, such that, by bringing said cut means (68) into contact with said adhesive tape (61) stretched while said free edge is being dragged, said adhesive tape (61) is cut, thereby creating a new free edge (61') that is exposed towards said connection position (14);
wherein said slide supplier (64) comprises a roll (59) of said adhesive tape (61), said roll rotatably arranged about an own rotation axis (59'), **characterised in that** said tape (61) tensioning means comprises a tape-retaining means (74,65, β) for retaining said adhesive tape (61) arranged outside of said roll (59) of said adhesive tape (61).

2. An apparatus (100) according to claim 1, comprising a program means for operating said slide supplier (64) actuation means (63',63") to move said slide supplier away from said connection position (14) and for actuating said cut means (68), wherein said program means is configured for sequentially performing:
- a first return stroke (15') of said slide supplier (64) away from said connection position (14), such that said tape is dragged and tensioned during said first stroke (15');
- a tape (61) cut step, by actuating said cut means (68);
- a second return stroke (15") of said slide supplier (64) away from said connection position (14), such that said free edge (61') of said tape (61) is brought to a predetermined distance from said cut means (68).

3. An apparatus according to claim 1, wherein said tape-retaining means comprises a surface (β) of a roller (65) that is arranged to create a predetermined friction with a non-adhesive surface of said adhesive tape (61),
In particular, said surface of said roller (65) is a knurled surface.

4. An apparatus (100), according to claim 1, wherein a count means for imparting a predetermined number of turns is associated to said rotation means (31), said count means comprising:
- a diameter detection means for detecting a diameter value of said tubular bodies (1',1);
- a computation means for computing said predetermined number of turns according to said diameter value, said computation means arranged to produce a turn number signal;
- a rotation-actuating means for actuating said rotation means (31) responsive to said signal,
and said computation means comprises a program means that is configured to:
- learn a number N of layers of adhesive tape to be wound about said tubular bodies;
- compute a number n of turns that said rotation means (31) must be forced to carry out according to the equation n=N*D/d, where d is the diameter of the peripheral dragging roller (31), D is the diameter of said tubular bodies (1',1) communicated by said detection means;
- transmitting said number of turns n to said rotation-actuating means, such that said rotation-actuating means actuates said predetermined number of turns of said tubular bodies (1',1) and stops said rotation-actuating means tubular (1',1) upon completion of said number of turns n.

5. An apparatus (100), according to claim 4, wherein said rotation means comprises a peripheral dragging roller (31).

6. An apparatus (100) for making a butt connection between tubular bodies (1',1) and transversally sawing said connected tubular body (1) into predetermined lengths according to claim 1, comprising
furthermore:
- a sawing station (30) equipped with a saw means (41) for transversally sawing said connected tubular body (1);
- a longitudinal conveying means (50) for conveying said connected tubular body (1) along a longitudinal direction defined by said longitudinal axis (16) up to said sawing station (30), said conveying means arranged to convey said connected tubular body (1) until the front end portion (5") of said connected tubular body (1) has gone beyond the saw means (41) by a predetermined pitch; such that, by actuating said saw means (41), a portion of tubular body is obtained that has the same length as said pitch.

7. An apparatus (100), according to claim 6, wherein said longitudinal conveying means (50) comprises two auto-centring rollers (53,54) arranged at opposite sides with respect to said connected tubular body (1) and pivotally connected to respective supports (51,52) that are configured to bring said auto-centring rollers (53,54) close around said connected tubular body (1) by laterally pushing said auto-centring rollers (53,54) against said connected tubular body (1), and to open and disengage said auto-centring rollers (53,54) away from said connected tubular body (1), wherein a first roller of said rollers (54) is a driven roller and a second of said rollers (53) is an idle roller, said supports (51,52) arranged to be closed and preferably opened through an actuation means, wherein an encoder (58) is associated with at least one roller (53) of said rollers (53,54) for measuring a longitudinal movement of said tubular bodies (1',1) and/or of said connected tubular body (1) towards said connection station (60) and/or towards said sawing station (30),

8. An apparatus (100), according to claim 7, wherein each of said supports (51,52) comprises an arm (51,52) rotatably arranged about an axis (55, 56) and has a free end connected to a respective roller of said rotating rollers (53,54), said diameter detection means of said tubular bodies (1',1) comprising a diameter detection means that include a angular position sensor, in particular a potentiometer, which is mounted on the axis of one of said rotating arms (51,52), in particular said angular position sensor is mounted on the rotation axis (55) of the rotating arm (51) that holds said idle roller (53).

9. An apparatus (100), according to claim 1, wherein an abutment means is provided for stopping said front end portion of said second tubular body at a predetermined position when said saw means is being operated, said abutment means comprising:
- a abutment carriage slidably arranged along said longitudinal direction;
- an abutment member connected to said abutment carriage and perpendicularly arranged with respect to said longitudinal direction;
- a means for moving said abutment carriage;
- a suction means for aspirating chips that are produced when said saw means is being operated (41), in particular said suction means comprising a suction duct that has one end pneumatically connected with a suction opening on said abutment member.

10. An apparatus (100), according to claim 1, wherein said tubular body feed means (1,1') comprises at least one device selected from the group consisting of:
- an elongated body (4) that has a star-shaped cross section, said elongated body arranged to rotate about an own longitudinal axis (3) parallel to said longitudinal axis (16) of said tubular bodies (1',1), said elongated body (4) comprising at least three continuous radial protrusions (2), in particular four 90° angularly spaced protrusions, in particular said continuous protrusions (2) extending along the whole length of said elongated body (4);
- a push means (20) for pushing said tubular bodies (1',1) along a longitudinal axis (16);
- an approach device (9) that is operatively in contact with said rear end portion (3') of said tubular bodies (1',1) and mounted on a motorized carriage (6), said approach device (9) comprising an actuator movably arranged with respect to said motorized carriage (6) along a longitudinal axis and configured for carrying out a further fine positioning stroke,
- a rolling cradle (10,11) consisting of a couple of parallel rollers (10,11), and a push means for pushing said tubular bodies (1',1) against said rolling cradle (10,11), said push means comprising a vertical pushing element (81) that is arranged to push against said tubular bodies (1',1) opposite to said rolling cradle (10,11).

11. An apparatus (100) according to claim 10, wherein said push means (20) comprises a motorized carriage (6) that is slidably arranged along the longitudinal axis of said tubular bodies (1',1), said carriage configured for carrying out a first positioning stroke.

12. An apparatus (100) according to claim 10, wherein said approach device (9) comprises at least two small aligned idle rollers (7,8) that have a rotation axis perpendicular to the longitudinal axis of said cores, wherein said rollers (7,8) are operatively in contact with said rear end portion (3').

13. An apparatus (100) according to claim 10, wherein said vertical pushing element (81) is mounted on said motorized carriage (6), in particular said vertical pushing element (81) comprising a fork (12) that is radially slidable with respect to said tubular bodies (1',1), said fork having a free end oriented towards said rolling cradle (10,11), said free end comprising at least two small idle rollers (13) that are arranged to be rotatably dragged on said rolling cradle (10,11) during a rotation of said tubular bodies (1',1).

## Patentansprüche

1. Vorrichtung (100) zum Herstellen einer Stoßverbindung zwischen rohrförmigen Körpern, insbesondere zwischen rohrförmigen Kernen für Spulen aus gewickeltem Material, aufweisend:
- eine Verbindungsstation (60),
- Zuführungsmittel für rohrförmige Körper, angeordnet, um einen ersten rohrförmigen Körper (1') und einen zweiten rohrförmigen Körper (1) untereinander ausgerichtet mit einem vorderen Endabschnitt (3") des zweiten rohrförmigen Körpers (1) angrenzend an einen hinteren Endabschnitt (5') des ersten rohrförmigen Körpers (1') an einer Verbindungsposition (14) der Verbindungsstation (60) zu positionieren,
- ein Drehmittel (31,62), um den ersten rohrförmigen Körper (1') und den zweiten rohrförmigen Körper (1) einstückig miteinander und um eine gemeinsame Längsachse (16) herum am Verbindungsposition (14) zu drehen,
wobei die Verbindungsstation (60) Folgendes umfasst;
- eine zum Freilegen eines freien Randes (61') des Klebebands in Richtung der Verbindungsposition (14) angeordnete schiebare Speisevorrichtung (64) für Klebeband (61),
- ein Betätigungsmittel (63',63") für die schiebbare Speisevorrichtung (64), das angeordnet ist, um die schiebbare Speisevorrichtung (64) näher zur Verbindungsposition (14) zu bringen und um den freien Rand zur Verbindungsposition (14) zu bringen, derart dass durch Bedienen der Drehmittel (31,62) der freie Rand (61') durch die drehenden rohrförmigen Körper (1',1) gezogen wird und er an den rohrförmigen Körpern (1',1) anhaftet und dadurch die Stoßverbindung der rohrförmigen Körper erzeugt, wobei der vordere Endabschnitt (3") mit dem hinteren Endabschnitt (5') verbunden wird, wobei ein verbundener rohrförmiger Körper (1) gebildet wird,
- ein Schneidmittel (68) zum Schneiden des Klebebands (61),
- ein Band-Spannmittel (74,65) zum Erzeugen einer vorbestimmten Spannung des Klebebands (61), während der freie Rand gezogen wird, derart dass, durch das In-Berührung-Bringen des Schneidmittels (68) mit dem während des Ziehens des freien Randes gestreckten Klebeband (61), das Klebeband (61) geschnitten wird und dadurch ein neuer freier Rand (61') erzeugt wird, der in Richtung der Verbindungsposition (14) freigelegt ist,
wobei die schiebbare Speisevorrichtung (64) eine Rolle (59) des Klebebands (61) aufweist, wobei die Rolle um einen eigene Drehachse (59') herum drehbar angeordnet ist,
**dadurch gekennzeichnet, dass** das Spannmittel des Bands (61) ein außerhalb der Rolle (59) des Klebebands (61) angeordnetes Band-Haltemittel (74,65, β) zum Halten des Klebebands (61) aufweist.

2. Vorrichtung (100) nach Anspruch 1, aufweisend ein Programmmittel zum Betreiben des Betätigungsmittels (63',63") für die schiebbare Speisevorrichtung (64), um die schiebbare Speisevorrichtung weg von der Verbindungsposition (14) zu bewegen, und zum Ansteuern des Schneidmittels (68), wobei das Programmmittel konfiguriert ist, um Folgendes sequentiell durchzuführen:
- einen ersten Rückhub (15') der schiebbaren Speisevorrichtung (64) weg von der Verbindungsposition (14), derart dass das Band während des ersten Hubes (15') gezogen und gespannt wird,
- ein Schritt, bei dem das Band (61) durch Ansteuern der Schneidmittels (68) geschnitten wird,
- einen zweiten Rückhub (15") der schiebbaren Speisevorrichtung (64) weg von der Verbindungsposition (14), derart dass der freie Rand (61') des Bands (61) zu einem vorbestimmten Abstand vom Schneidmittel (68) gebracht wird.

3. Vorrichtung nach Anspruch 1, wobei das Band-Haltemittel eine Oberfläche (β) einer Walze (65) aufweist, die angeordnet ist, um eine vorbestimmte Reibung mit einer nicht nichtklebenden Oberfläche des Klebebands (61) zu erzeugen.
Insbesondere ist Oberfläche der Walze (65) eine gerändelte Oberfläche.

4. Vorrichtung (100) nach Anspruch 1, wobei ein Zählmittel zum Erteilen einer vorbestimmten Anzahl Drehungen dem Drehmittel (31) zugeordnet ist, wobei das Zählmittel Folgendes aufweist:
- ein Durchmesser-Erkennungsmittel zum Erkennen eines Durchmesserwertes der rohrförmigen Körper (1',1),
- ein Berechnungsmittel zum Berechnen der vorbestimmten Anzahl Drehungen gemäß dem Durchmesserwert, wobei das Berechnungsmittel eingerichtet ist, um ein Drehanzahlsignal zu erzeugen,
- ein Drehansteuerungsmittel zum Ansteuern des Drehmittels (31) in Reaktion auf das Signal,
und das Berechnungsmittel weist ein Programmmittel auf, das konfiguriert ist, um:
- eine Anzahl N von um die rohrförmigen Körper herum zu wickelnden Klebebandschichten zu lernen,
- eine Anzahl n von Drehungen zu berechnen, deren Durchführung dem Drehmittel (31) entsprechend der Gleichung n=N*D/d aufgezwungen werden muss, wo d der Durchmesser der periphären Ziehwalze (31) ist, D der vom Erkennungsmittel mitgeteilte Durchmesser der rohrförmigen Körper (1',1) ist,
- die Anzahl n von Drehungen an das Drehansteuerungsmittel zu übertragen, derart dass das Drehansteuerungsmittel die vorbestimmte Anzahl Drehungen der rohrförmigen Körper (1',1) wirkt und das Drehansteuerungsmittel rohrförmig (1',1) nach Ausführung der Anzahl Drehungen n stoppt.

5. Vorrichtung (100) nach Anspruch 4, wobei das Drehmittel eine periphäre Ziehwalze (31) aufweist.

6. Vorrichtung (100) zum Herstellen einer Stoßverbindung zwischen rohrförmigen Körpern (1',1) und Quersägen des verbunden rorhförmigen and transversally sawing said connected tubular body (1) in vorbestimmte Längen gemäß Anspruch 1, ferner aufweisend:
- eine mit einem Sägemittel (41) zum Quersägen des verbundenen rohrförmigen Körpers (1) ausgerüstete Sägestation (30),
- ein Längsfördermittel (50) zum Fördern des verbundenen rohrförmigen Körpers (1) entlang einer durch die Längsachse (16) definierte Längsrichtung bis zur Sägestation (30), wobei das Fördermittel angeordnet ist, um den rohrförmigen Körper (1) zu befördern, bis der vordere Endabschnitt (5") des verbundenen rohrförmigen Körpers (1) um einen vorbestimmten Abstand über das Sägemittel (41) hinaus geht, derart dass durch Betätigen des Sägemittels (41) ein Abschnitt des rohrförmigen Körpers erhalten wird, das die gleiche Länge wie der Abstand hat.

7. Vorrichtung (100) nach Anspruch 6, wobei das Längsfördermittel (50) zwei selbstzentrierende Walzen (53,54) aufweist, die an gegenüberliegenden Seiten bezüglich des rohrförmige Körpers (1) angeordnet sind und schwenkbar mit jeweiligen Unterstützungen (51,52) verbunden sind, die ausgestaltet sind, um die selbstzentrierenden Walzen (53,54) dicht um den verbundenen rohrförmigen Körper (1) durch seitliches Schieben der selbstzentrierenden Walzen (53,54) gegen den verbundenen rorhförmigen Körper (1) zu bringen und um die selbstzentrierenden Walzen (53,54) zu öffnen und weg vom verbundenen rohrförmigen Körper (1) zu lösen, wobei eine erste Walze der Walzen (54) eine Antriebswalze ist und eine zweite der Walzen (53) eine Mitläuferwalze ist, wobei die Unterstützungen (51,52) angeordnet sind, um durch ein Betätigungsmittel geschlossen und vorzugweise geöffnet zu werden, wobei ein Encoder (58) mindestens einer Walze (53) der Walzen (53,54) zum Messen einer Längsbewegung der rohrförmigen Körper (1',1) und/oder des verbundenen rohrförmigen Körpers (1) in Richtung der Verbindungsstation (60) und/oder in Richtung der Sägestation (30) zugeordnet ist,

8. Vorrichtung (100) nach Anspruch 7, wobei jede der Unterstützungen (51,52) einen drehbar um eine Achse (55, 56) herum angeordneten Arm (51,52) aufweist und ein mit einer jeweiligen Walze der drehenden Walzen (53,54) verbundenes freies Ende hat, wobei das Durchmesser-Erkennungsmittel der rohrförmigen Körper (1',1) ein Durchmesser-Erkennungsmittel aufweist, das einen Winkelpositionssensor umfasst, insbesondere ein Potentiometer, der auf der Achse eines der drehenden Arme (51,52) montiert ist, insbesondere ist der Winkelpositionssensor auf der Drehachse (55) des drehenden Arms (51), der die Mitläuferwalze (53) hält, montiert.

9. Vorrichtung (100) nach Anspruch 1, wobei ein Anschlagmittel zum Stoppen des vorderen Endabschnitts des zweiten rohrförmigen Körpers an einer vordefinierten Position, wenn das Sägemittel betrieben wird, vorgesehen ist, wobei das Anschlagmittel Folgendes aufweist:
- einen gleitbar entlang der Längsrichtung angeordneten Anschlagschlitten,
- ein Anschlagelement, das mit dem Anschlagschlitten verbunden ist und senkrecht zur Längsrichtung angeordnet ist,
- ein Mittel zum Bewegen des Anschlagschlittens,
- ein Ansaugmittel zum Ansaugen von Spänen, die erzeugt werden, wenn das Sägemittel betrieben (41) wird, wobei das Ansaugmittel insbesondere einen Ansaugkanal aufweist, der ein Ende an einer Ansaugöffnung am Anschlagelement pneumatisch angeschlossen hat.

10. Vorrichtung (100) nach Anspruch 1, wobei das Zuführungsmittel für rohrförmige Körper (1,1') mindestens eine Vorrichtung aufweist, die ausgewählt ist aus der Gruppe bestehend aus:
- einem länglichen Körper (4), der einen sternförmigen Querschnitt hat, wobei der längliche Körper angeordnet ist, um sich um eine eigene Längsachse (3), die parallel zur Längsachse (16) der rohrförmigen Körper ist, herum zu drehen, wobei der längliche Körper (4) mindestens drei durchgehende radiale Vorsprünge (2), insbesondere vier winkelmäßig um 90° beabstandete Vorsprünge aufweist, wobei diese durchgehenden Vorsprünge (2) sich insbesondere entlang der gesamten Länge des länglichen Körpers (4) erstrecken,
- einem Schiebemittel (20) zum Schieben der rohrförmigen Körper (1',1) entlang einer Längsachse (16),
- einer Annäherungsvorrichtung (9), die funktionsmäßig mit dem hinteren Endabschnitt (3') der rohrförmigen Körper (1',1) in Berührung und auf einem motorisierten Schlitten (6) montiert ist, wobei die Annährungsvorrichtung (9) ein Stellglied aufweist, der bewegbar bezüglich dem motorisierten Schlitten (6) entlang einer Längsachse angeordnet und zur Durchführung eines weiteren Feinpositionierungshubs gestaltet ist,
- einem Rollgestell (10,11) bestehend aus einen Paar parallelen Walzen (10,11) und einem Schiebemittel zum Schieben der rohrförmigen Körper (1',1) gegen das Rollgestell (10,11), wobei das Schiebemittel ein vertikales Schiebeelement (81) aufweist, das angeordnet ist, um gegen die dem Rollgestell (10,11) gegenüberliegenden rohrförmigen Körper (1',1) zu schieben.

11. Vorrichtung (100) nach Anspruch 10, wobei das Schiebemittel (20) einen motorisierten Schlitten (6) aufweist, der gleitbar entlang der Längsachse der rohrförmigen Körper (1',1) angeordnet ist, wobei der Schlitten zur Durchführung eines ersten Positionierungshubs gestaltet ist.

12. Vorrichtung (100) nach Anspruch 10, wobei die Annäherungsvorrichtung (9) mindestens zwei kleine ausgerichteten Mitläuferwalzen (7,8) aufweist, die eine zur Längsachse der Kerne senkrecht verlaufende Drehachse haben, wobei die Walzen (7,8) funktionsmäßig mit dem hinteren Endabschnitt (3') in Kontakt sind.

13. Vorrichtung (100) nach Anspruch 10, wobei das vertikale Schiebeelement (81) auf dem motorisierten Schlitten (6) montiert ist, wobei das vertikale Schiebeelement (81) insbesondere eine Gabel (12) aufweist, die bezüglich der rohrförmigen Körper (1',1) radial gleitbar ist, wobei die Gabel ein freies, in Richtung des Rollgestells (10,11) orientiertes Ende hat, wobei das freie Ende mindestens zwei kleine Mitläuferrollen (13) aufweist, die angeordnet sind, um drehbar am Rollgestell (10,11) während einer Drehung der rohrförmigen Körper (1',1) geschleppt zu werden.

## Revendications

1. Appareil (100) permettant d'effectuer un assemblage bout-à-bout entre des corps tubulaires, en particulier entre des noyaux tubulaires de bobines de matériau bobiné, comprenant :
- un poste d'assemblage (60) ;
- un moyen d'alimentation en corps tubulaires conçu pour positionner un premier corps tubulaire (1') et un second corps tubulaire (1) en alignement l'un avec l'autre, une partie d'extrémité avant (3") dudit second corps tubulaire (1) étant adjacente à une partie d'extrémité arrière (5') dudit premier corps tubulaire (1') au niveau d'une position d'assemblage (14) dudit poste d'assemblage (60) ;
- un moyen d'entraînement en rotation (31, 62) destiné à entraîner conjointement en rotation ledit premier corps tubulaire (1') et ledit second corps tubulaire (1) autour d'un axe longitudinal commun (16) au niveau de ladite position d'assemblage (14); dans lequel ledit poste d'assemblage (60) comprend :
- un dispositif d'alimentation coulissant (64) de bande adhésive (61) conçu pour exposer un bord libre (61') de ladite bande adhésive en direction de ladite position d'assemblage (14) ;
un moyen d'actionnement (63', 63") de dispositif d'alimentation coulissant (64) conçu pour amener ledit dispositif d'alimentation coulissant (64) plus près de ladite position d'assemblage (14), et pour amener ledit bord libre vers ladite position d'assemblage (14) de sorte que, par une mise en oeuvre dudit moyen d'entraînement en rotation (31, 62), ledit bord libre (61') est tiré par lesdits corps tubulaires (1', 1) faisant l'objet d'un entraînement en rotation et qu'il adhère auxdits corps tubulaires (1', 1), créant ainsi ledit assemblage bout-à-bout desdits corps tubulaires, dans lequel ladite partie d'extrémité avant (3") est assemblée à ladite partie d'extrémité arrière (5'), formant un corps tubulaire assemblé (1) ;
- un moyen de coupe (68) destiné à couper ladite bande adhésive (61) ;
- un moyen de tension (74, 65) de bande destiné à créer une tension prédéfinie de ladite bande adhésive (61) pendant que ledit bord libre est tiré de sorte que, en amenant ledit moyen de coupe (68) en contact avec ladite bande adhésive (61) étirée pendant que ledit bord libre est tiré, ladite bande adhésive (61) est coupée, ce qui crée un nouveau bord libre (61') qui est exposé en direction de ladite position d'assemblage (14) ;
dans lequel ledit dispositif d'alimentation coulissant (64) comprend un rouleau (59) de ladite bande adhésive (61), ledit rouleau étant disposé rotatif autour d'un axe de rotation (59') qui lui est propre,
**caractérisé en ce que** ledit moyen de tension de bande (61) comprend un moyen de maintien (74, 65, β) de bande destiné à maintenir ladite bande adhésive (61) disposée à l'extérieur dudit rouleau (59) de ladite bande adhésive (61).

2. Appareil (100) selon la revendication 1, comprenant un moyen formant programme permettant de mettre en oeuvre ledit moyen d'actionnement (63', 63") de dispositif d'alimentation coulissant (64) pour qu'il déplace ledit dispositif d'alimentation coulissant en l'éloignant de ladite position d'assemblage (14) et permettant d'actionner ledit moyen de coupe (68), dans lequel ledit moyen formant programme est conçu pour exécuter séquentiellement :
- une première course de retour (15') dudit dispositif d'alimentation coulissant (64) l'éloignant de ladite position d'assemblage (14), de sorte que ladite bande soit tirée et tendue pendant ladite première course (15') ;
- une étape de coupe de bande (61), par actionnement dudit moyen de coupe (68) ;
- une seconde course de retour (15") dudit dispositif d'alimentation coulissant (64) l'éloignant de ladite position d'assemblage (14), de sorte que ledit bord libre (61') de ladite bande (61) soit amené à une distance prédéfinie dudit moyen de coupe (68).

3. Appareil selon la revendication 1, dans lequel ledit moyen de maintien de bande comprend une surface (β) d'un rouleau (65) qui est conçue pour créer un frottement prédéfini avec une surface non adhésive de ladite bande adhésive (61),
en particulier, ladite surface dudit rouleau (65) est une surface moletée.

4. Appareil (100) selon la revendication 1, dans lequel un moyen de comptage destiné à communiquer un nombre prédéfini de tours est associé audit moyen d'entraînement en rotation (31), ledit moyen de comptage comprenant :
- un moyen de détection de diamètre destiné à détecter une valeur de diamètre desdits corps tubulaires (1', 1) ;
- un moyen de calcul destiné à calculer ledit nombre prédéfini de tours conformément à ladite valeur de diamètre, ledit moyen de calcul étant conçu pour produire un signal de nombre de tours ;
- un moyen de commande d'entraînement en rotation destiné à commander ledit moyen d'entraînement en rotation (31) en réponse audit signal,
et ledit moyen de calcul comprenant un moyen formant programme conçu pour :
- prendre connaissance d'un nombre N de couches de bande adhésive à bobiner autour desdits corps tubulaires ;
- calculer un nombre n de tours que ledit moyen d'entraînement en rotation (31) doit être forcé d'effectuer conformément à l'équation n=N*D/d, d étant le diamètre du rouleau de tirée périphérique (31), D étant le diamètre desdits corps tubulaires (1', 1) communiqué par ledit moyen de détection ;
- transmettre ledit nombre n de tours audit moyen de commande d'entraînement en rotation, de sorte que ledit moyen de commande d'entraînement en rotation commande ledit nombre prédéfini de tours desdits corps tubulaires (1', 1) et arrête ledit moyen d'entraînement en rotation desdits corps tubulaires (1', 1) lorsque ledit nombre n de tours a été effectué.

5. Appareil (100) selon la revendication 4, dans lequel ledit moyen d'entraînement en rotation comprend un rouleau de tirée périphérique (31).

6. Appareil (100) permettant d'effectuer un assemblage bout-à-bout entre des corps tubulaires (1', 1) et de scier transversalement ledit corps tubulaire assemblé (1) en longueurs prédéfinies selon la revendication 1, comprenant en outre :
- un poste de sciage (30) équipé d'un moyen formant scie (41) destiné à scier transversalement ledit corps tubulaire assemblé (1) ;
- un moyen d'acheminement longitudinal (50) destiné à acheminer ledit corps tubulaire assemblé (1) dans une direction longitudinale définie par ledit axe longitudinal (16) jusqu'audit poste de sciage (30), ledit moyen d'acheminement étant conçu pour acheminer ledit corps tubulaire assemblé (1) jusqu'à ce que la partie d'extrémité avant (5") dudit corps tubulaire assemblé (1) ait dépassé le moyen formant scie (41) d'un pas prédéfini ; de façon à obtenir une partie de corps tubulaire ayant la même longueur que ledit pas par actionnement dudit moyen formant scie (41).

7. Appareil (100) selon la revendication 6, dans lequel ledit moyen d'acheminement longitudinal (50) comprend deux rouleaux d'auto-centrage (53, 54) disposés au niveau de côtés opposés par rapport audit corps tubulaire assemblé (1) et reliés pivotants à des supports respectifs (51, 52) qui sont conçus pour amener lesdits rouleaux d'auto-centrage (53, 54) à proximité immédiate de la périphérie dudit corps tubulaire assemblé (1) par poussée latérale desdits rouleaux d'auto-centrage (53, 54) contre ledit corps tubulaire assemblé (1), et pour ouvrir et dégager lesdits rouleaux d'auto-centrage (53, 54) en les éloignant dudit corps tubulaire assemblé (1), dans lequel un premier rouleau (54) desdits rouleaux est un rouleau mené et un second rouleau (53) desdits rouleaux est un rouleau fou, lesdits supports (51, 52) étant conçus pour être fermés et, de préférence, ouverts par un moyen d'actionnement, dans lequel un codeur (58) est associé à au moins un rouleau (53) desdits rouleaux (53, 54) de façon à mesurer un déplacement longitudinal desdits corps tubulaires (1', 1) et/ou dudit corps tubulaire assemblé (1) en direction dudit poste d'assemblage (60) et/ou en direction dudit poste de sciage (30).

8. Appareil (100) selon la revendication 7, dans lequel chacun desdits supports (51, 52) comprend un bras (51, 52) disposer pivotant autour d'un axe (55, 56) et comporte une extrémité libre reliée à un rouleau respectif desdits rouleaux rotatifs (53, 54), ledit moyen de détection de diamètre desdits corps tubulaires (1', 1) comprenant un moyen de détection de diamètre qui comprend un capteur de position angulaire, en particulier un potentiomètre, qui est monté sur l'axe de l'un desdits bras pivotants (51, 52), ledit capteur de position angulaire étant particulièrement monté sur l'axe de rotation (55) du bras pivotant (51) qui maintient ledit rouleau fou (53).

9. Appareil (100) selon la revendication 1, dans lequel un moyen de butée est prévu pour arrêter ladite partie d'extrémité avant dudit second corps tubulaire à une position prédéfinie lors de la mise en oeuvre du moyen formant scie, ledit moyen de butée comprenant :
- un chariot de butée disposé coulissant dans ladite direction longitudinale ;
- un élément de butée relié audit chariot de butée et disposé perpendiculairement à ladite direction longitudinale ;
- un moyen destiné à déplacer ledit chariot de butée ;
- un moyen d'aspiration destiné à aspirer des copeaux qui sont produits lors de la mise en oeuvre dudit moyen formant scie (41), ledit moyen d'aspiration comprenant particulièrement une conduite d'aspiration dont une extrémité est raccordée de manière pneumatique à une ouverture d'aspiration située sur ledit élément de butée.

10. Appareil (100) selon la revendication 1, dans lequel ledit moyen d'alimentation en corps tubulaires (1, 1') comprend au moins un dispositif sélectionné dans le groupe constitué :
- d'un corps allongé (4) qui a une section transversale en forme d'étoile, ledit corps allongé étant conçu pour tourner autour d'un axe longitudinal (3) qui lui est propre parallèle audit axe longitudinal (16) desdits corps tubulaires (1', 1), ledit corps allongé (4) comprenant au moins trois saillies radiales continues (2), en particulier quatre saillies espacées angulairement de 90°, lesdites saillies continues (2) s'étendant particulièrement sur toute la longueur dudit corps allongé (4) ;
- un moyen de poussée (20) destiné à pousser lesdits corps tubulaires (1', 1) le long d'un axe longitudinal (16) ;
- un dispositif d'approche (9) qui est en contact fonctionnel avec ladite partie d'extrémité arrière (3') desdits corps tubulaires (1', 1) et qui est monté sur un chariot motorisé (6), ledit dispositif d'approche (9) comprenant un actionneur disposé mobile par rapport audit chariot motorisé (6) le long d'un axe longitudinal et conçu pour exécuter une course de positionnement fin supplémentaire,
- un berceau de roulement (10, 11) constitué de deux rouleaux parallèles (10, 11) et d'un moyen de poussée destiné à pousser lesdits corps tubulaires (1', 1) contre ledit berceau de roulement (10, 11), ledit moyen de poussée comprenant un élément de poussée vertical (81) qui est conçu pour pousser lesdits corps tubulaires (1', 1) à l'opposé dudit berceau de roulement (10, 11).

11. Appareil (100) selon la revendication 10, dans lequel ledit moyen de poussée (20) comprend un chariot motorisé (6) qui est disposé coulissant le long de l'axe longitudinal desdits corps tubulaires (1', 1), ledit chariot étant conçu pour exécuter une première course de positionnement.

12. Appareil (100) selon la revendication 10, dans lequel ledit dispositif d'approche (9) comprend au moins deux petits rouleaux fous alignés (7, 8) qui ont un axe de rotation perpendiculaire à l'axe longitudinal desdits noyaux, dans lequel lesdits rouleaux (7, 8) sont en contact fonctionnel avec ladite partie d'extrémité arrière (3').

13. Appareil (100) selon la revendication 10, dans lequel ledit élément de poussée vertical (81) est monté sur ledit chariot motorisé (6), ledit élément de poussée vertical (81) comprenant particulièrement une fourche (12) qui peut coulisser radialement par rapport auxdits corps tubulaires (1', 1), ladite fourche comportant une extrémité libre orientée vers ledit berceau de roulement (10, 11), ladite extrémité libre comprenant au moins deux petits rouleaux fous (13) qui sont conçus de façon à suivre la rotation desdits corps tubulaires (1', 1) pendant leur rotation sur ledit berceau de roulement (10, 11).
